# EUROPEAN PATENT SPECIFICATION

(11) **EP 2 391 062 B1**
(45) Date of publication and mention of the grant of the patent: **17.08.2016**
(21) Application number: 09838596.6
(22) Date of filing: 24.01.2009
(51) Int. Cl.: H04L 12/28

(54) **APPARATUSES FOR REALIZING REMOTE CONTROL OF DEVICES THROUGH NETWORK ADDRESS CONFIGURATION SERVER**
VORRICHTUNGEN ZUR DURCHFÜHRUNG DER FERNSTEUERUNG VON GERÄTEN ÜBER EINEN NETZWERKADRESSEN-KONFIGURATIONSSERVER
APPAREILS POUR OBTENIR UNE COMMANDE À DISTANCE DE DISPOSITIFS PAR L'INTERMÉDIAIRE D'UN SERVEUR DE CONFIGURATION D'ADRESSE RÉSEAU

(43) Date of publication of application: 30.11.2011
(73) Proprietor: ALCATEL LUCENT, 92100 Boulogne-Billancourt (FR)
(72) Inventor: GE, Lifa, Shanghai 201206 (CN); HU, Jianjun, Shanghai 201206 (CN); ZHAO, Minzheng, Shanghai 201206 (CN)
(74) Representative: Knecht, Ulrich Karl
(86) International application number: PCT/CN2009/000115
(87) International publication number: WO 2010/083629

(56) References cited:
- EP-A2- 1 198 108
- WO-A1-03/065685
- WO-A1-2004/032452
- CN-A- 1 953 431
- CN-A- 101 247 297
- US-A1- 2003 018 753
- US-A1- 2003 101 217
- US-A1- 2006 056 397
- US-A1- 2006 069 836
- ALEXANDER SILICON GRAPHICS S ET AL: "DHCP Options and BOOTP Vendor Extensions; rfc2132.txt", 19970301, 1 March 1997 (1997-03-01), XP015007916, ISSN: 0000-0003
- JUAN ANTONIO GIL-MARTINEZ-ABARCA ET AL: "Wake on LAN over Internet as Web Service", EMERGING TECHNOLOGIES AND FACTORY AUTOMATION, 2006. ETFA '06. IEE E CONFERENCE ON, IEEE, PI, 1 September 2006 (2006-09-01), pages 1261-1268, XP031082636, ISBN: 978-0-7803-9758-3

## Description

### Technical field of the invention

The present invention relates to remote control system for controlling a network apparatus remotely.

### Background of the invention

With the continuous evolution of communication technology, network technology, it has become a trend of household electric appliance to realize, by networking, the remote control for the household electric appliance. Currently, many remote control schemes on the basis of networking of household electric appliance have been proposed.

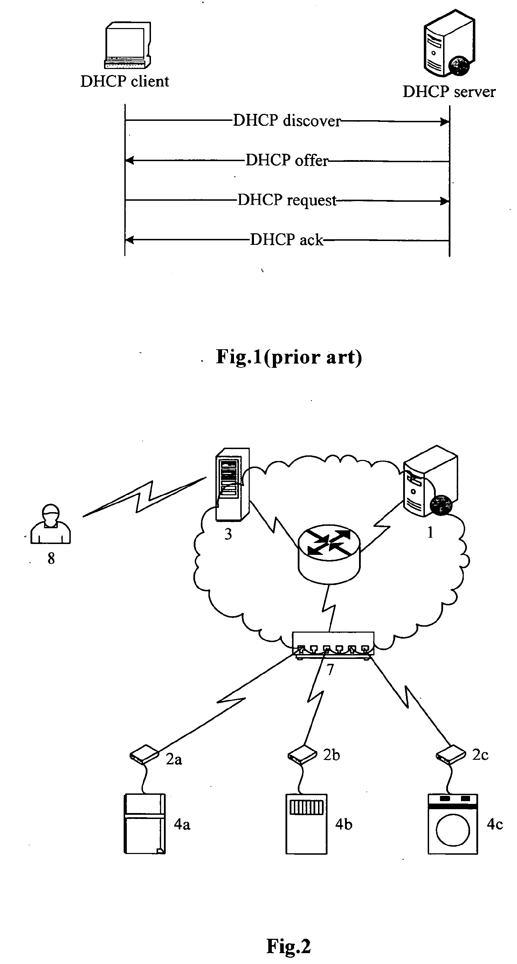

To realize networking of household electric appliance, IP address have to be assigned for household electric appliance device, in a network using TCP/IP protocol, DHCP (Dynamic Host Configuration) protocol is often adopted to dynamically assign IP address for client. Figure 1 shows a simple flowchart of assigning IP address to a client by a DHCP server. As a DHCP client logs on the network for the first time, the client finds there is no IP data setting in native machine, and then it sends a DHCP discover package to the network. When the DHCP server monitors the DHCP discover broadcast from the client, it will select an available IP address, and feed a DHCP offer package containing the IP address and other TCP/IP settings back to the client. Due to the absence of IP address for the client at beginning, so the DHCP discover package shall contain the client's MAC address and a XID number for recognition of the package, DHCP offer package fed back by DHCP server will be sent to the client requesting for a lease according to these datum. If the client receives the feedback from multiple DHCP servers in the network, it will select one of the DHCP offers (normally the first arriving one), and sends a DHCP request broadcast package to the network, thereby informing all the DHCP servers that IP address of which server will be specified to accept. After DHCP server receives the DHCP request from the client, it will feed a DHCP ACK back to client, so as to confirm the enactment of the IP lease, thus a complete DHCP work flow concludes.

Current DHCP server are just used for assigning the IP address of client, without the ability to satisfy more application requirements from clients, while more functionalities are desired from DHCP server.

US 2003/101217 A1, describes a communication system using an extension of the DHCP (Dynamic Host Configuration Protocol) capable of transferring setting information such that a user who carries a network terminal with him/her and tries to connect the network terminal to a different network can connect the network terminal to the network and utilize a network application.

US 2006/069836 A1 describes a communication system for a software upgrade of a user terminal in a wireless mobile Internet network including in particular an IP network, the user terminal, a base station, a DHCP server and a TFTP (Trivial File Transfer Protocol) server. The user terminal connects to the IP network through the base station and can communicate with the DHCP server and the TFTP server.

EP 1 198 108 A2, describes a method of automated configuration of an automated module connected to a TCP/IP network. The automated module is connected to the TPC/IP network which is also accessible by a DHCP server. The FTP/TFTP client of the automated module can retrieve configuration information from a FTF/TFTP server based in particular on the information received from the DHCP server where to receive the configuration information. Based on this information, the FTP/TFTP server can get the configuration information from its memory.

WO 03/065685 A1 describes a server processing system using the DHCP protocol to provide network configuration information for a client processing system. The configuration information may include presentation information which is processed when the client uses the configuration information.

US 2006/056397 A1 describes a remote start-up method of a terminal device. A terminal device is remotely started by a requesting terminal in cooperation with a home router. A start-up packet is sent from the requesting terminal. The start-up packet from the requesting terminal is received by the home router. The home router provides both a registration procedure using e.g. DHCP messages with the terminal device and a wake-up procedure by sending a WoL (Wake on LAN packet) to the terminal device.

JUAN ANTONIO GIL-MARTINEZ-ABARCA ET AL: "Wake on LAN over Internet as Web Service", EMERGING TECHNOLOGIES AND FACTORY AUTOMATION, 2006. ETFA '06. IEE E CONFERENCE ON, IEEE, PI, 1 September 2006 (2006-09-01), pages 1261 - 1268, XP031082636, ISBN: 978-0-7803-9758-3 describes the use of WoL (wake on LAN) over the Internet technology to activate a network node in a local area network. Instructions to remotely boot a network node are transmitted. Then a respective WoLI (WoL over Internet) agent undertakes to translate the request to a WoL datagram.

ALEXANDER SILICON GRAPHICS S ET AL: "DHCP Options and BOOTP Vendor Extensions; rfc2132.txt", 19970301, 1 March 1997 (1997-03-01), XP015007916, ISSN: 0000-0003 describes options for use with the Dynamic Host Configuration Protocol. Configuration parameters and other control information are carried in tagged data items that are stored in the 'options' field of the DHCP messages.

### Summary of the invention

To satisfy the above requirements, the present invention provided devices as set out in the claims.

### Brief description of the drawings

Features, aspects and advantages of the present invention will become more obvious by reading the following description of non-limiting embodiments with the aid of appended drawings.
Fig.1 illustrates a flowchart in the prior art where the DHCP server is a client assigning IP address;
Fig.2 illustrates a remote control system for network devices according to one embodiment of the present invention;
Fig.3 illustrates the flowchart of a method for controlling an apparatus remotely in the network address configuration server of a communication network according to one embodiment of the present invention;
Fig.4 illustrates the flowchart of a method of aiding controlling apparatus remotely in an apparatus controlling unit according to one embodiment of the present invention;
Fig.5 illustrates the flowchart of a method of aiding controlling apparatus remotely in a user access server according to one embodiment of the present invention;
Fig.6 illustrates an adopted DHCP option structure according to one embodiment of the present invention;
Fig.7 illustrates a block diagram of a remote control device for controlling an apparatus remotely in the network address configuration server of a communication network according to one embodiment of the present invention;
Fig.8 illustrates a block diagram of a first aiding device for aiding controlling apparatus remotely in an apparatus controlling unit according to one embodiment of the present invention;
Fig.9 illustrates a block diagram of a second aiding device for aiding controlling apparatus remotely in a user access server according to one embodiment of the present invention;
wherein, same or similar reference numerals refer to the same or similar device(module) or step of method.

### Detailed description of embodiments

Fig.2 illustrates a remote control system according to one embodiment of the present invention. As shown in Fig.2, the remote control system comprises network address configuration server 1, apparatus controlling unit 2a, 2b, 2c, user access server 3, remotely controllable apparatus 4a, 4b, 4c, and access device 7 and so on, wherein each apparatus controlling unit is configured to control a device, and apparatus controlling unit is generally disposed inside the corresponding device, for instance, apparatus controlling unit 2a is disposed within apparatus 4a. The remotely controllable device in the present invention is normally household electric appliance, for instance, apparatus 4a is a refrigerator, device 4b is a air-conditioner, device 4c is a washing machine. Certainly, the method and device of the present invention may be further configured to remotely control those apparatus other than household electric appliance.

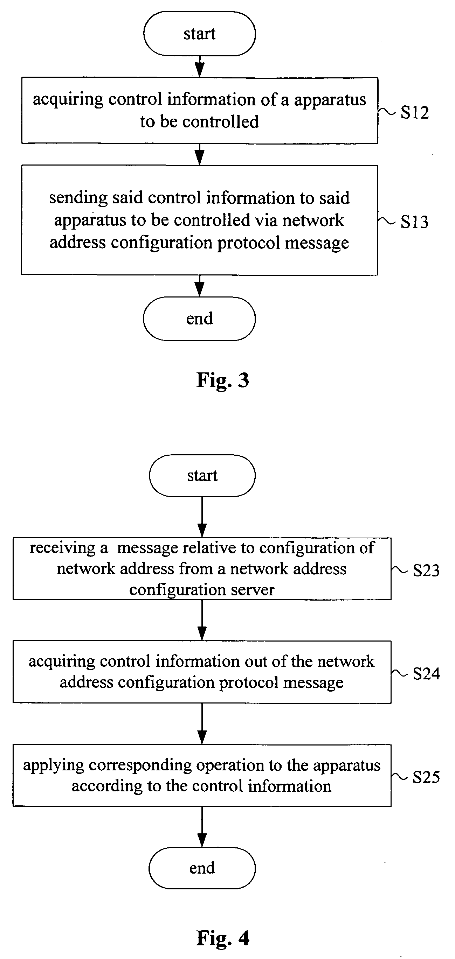

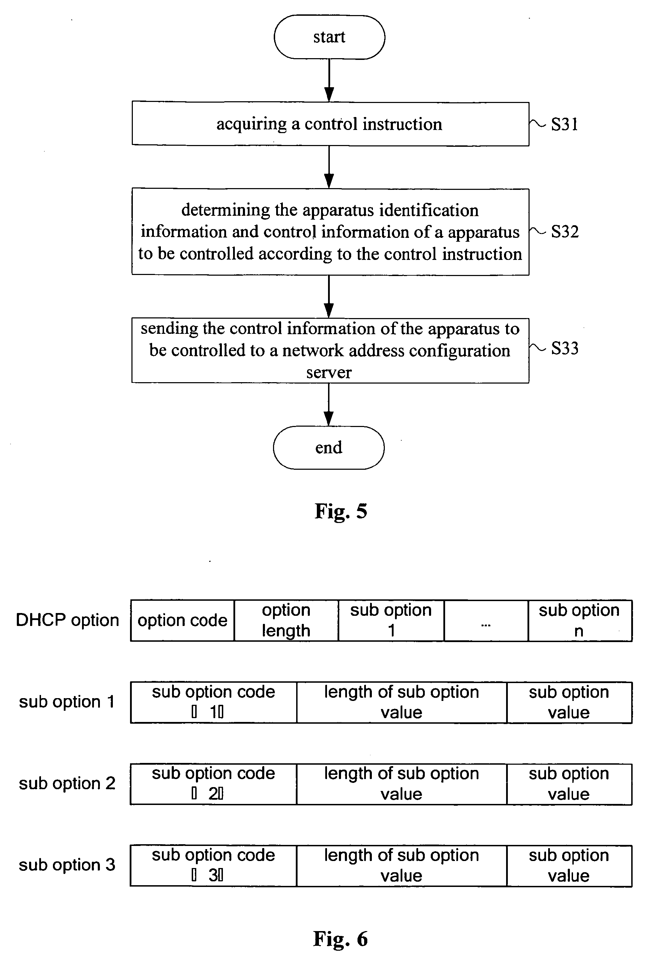

Fig.3 illustrates the flowchart of a method for controlling an apparatus remotely in the network address configuration server of a communication network according to one embodiment of the present invention. Fig.4 illustrates the flowchart of a method of aiding controlling apparatus remotely in an apparatus controlling unit according to one embodiment of the present invention. Fig.5 illustrates the flowchart of a method of aiding controlling apparatus remotely in a user access server according to one embodiment of the present invention.

Descriptions of the present invention will be given as below from a method aspect in conjunction with Fig.2 through Fig.5.

According to an embodiment of the present invention, remote control applied by network address configuration server 1 to apparatus 4a is as follows, wherein apparatus 4a is a refrigerator.

With reference to Fig.3, following steps will be performed on the side of network address configuration server 1:
In step S12, network address configuration server 1 acquires control information of apparatus 4a. Apparatus 4a is a refrigerator, then its control information may comprise setting about running time, for instance starting time 16:00, ending time 20:00, and setting about running temperature, for instance 0°C.

Subsequently, in step S 13, network address configuration server 1 sends the control information about apparatus 4a to apparatus 4a via network address configuration protocol message. Specifically, the network address configuration protocol message herein may adopt DHCP message, and control information may be loaded in the extended option field of DHCP message. The network address configuration protocol message sent by the network address configuration server 1 may be DHCP offer message or DHCP ACK message.

Generally, apparatus controlling unit 2a is disposed inside apparatus 4a. Otherwise, apparatus controlling unit 2a may be an independent apparatus in connection with apparatus 4a. Referring to Fig.4, the following step will be performed on the side of apparatus controlling unit 2a:
In step S23, apparatus controlling unit 2a receives network address configuration protocol message from network address configuration server 1.

In step S24, apparatus controlling unit 2a acquires control information about apparatus 4a from the received protocol message.

In step S25, apparatus controlling unit 2a applies corresponding action to apparatus 4a according to the control information. For instance, apparatus controlling unit 2a controls apparatus 4a to start at 16:00, and sets the operating temperature to be 0°C; at 20: 00, apparatus controlling unit 2a controls apparatus 4a to stop operation.

Preferably, prior to step S23, apparatus controlling unit 2a sends a network address configuration protocol message to network address configuration server 1, which is used for querying network address configuration information and/or control information. Specifically, the network address configuration protocol message sent by apparatus controlling unit 2a may be DHCP discover message or DHCP request message.

More specifically, before sending out network address configuration protocol message, apparatus controlling unit 2a acquires trigger signal, such trigger signal is from user access server 3. The apparatus controlling unit 2a sends the network address configuration protocol message to network address configuration server 1 according to the acquired trigger signal. If trigger signal comprises initiating control signal, then apparatus controlling unit 2a initiates apparatus 4a according to the initiating control signal, then sends the network address configuration protocol message to network address configuration server 1.

After network address configuration server 1 receives the network address configuration protocol message from apparatus controlling unit 2a, it starts to perform step S12. Specifically, network address configuration server 1 determines the identification information of apparatus 4a according to the address configuration protocol message from apparatus controlling unit 2a, and determines the control information of apparatus 4a according to such identification information. More specifically, the identification information of apparatus 4a may be the routing identification information thereof, for instance the port number, of access device 7, occupied on occasion of apparatus 4a accessing network, and so on; or, such identification information may also be the hardware identification information of apparatus 4a, for instance the MAC address thereof.

Additionally, according to the network address configuration protocol message from apparatus controlling unit 2a, network address configuration server 1 further judges whether apparatus 4a has a network address. If apparatus 4a has no network address, then network address configuration server 1 assigns network address to apparatus 4a, then in step S 13, sends control information of both network address and apparatus 4a to apparatus 4a via the network address configuration protocol message.

Referring to Fig. 5, on the side of user access server 3, following operation will be perfumed:
In step S31, user access server 3 acquires the control instruction from client. For instance, apparatus 4a is an electrical apparatus in the house of user 8, user 8 sets control instruction for apparatus 4a. The specific setting mode might be that user 8 remotely log on user access server 3 to set, or user access server 3 receives short message from user 8 to finish the setting, and so on.

Subsequently, in step S32, user access server 3 determines the identification information of apparatus 4a according to the acquired control instruction about apparatus 4a, and transforms the content of the control instruction to control information suitable for a transmission via the network address configuration protocol message.

Then, in step S33, user access server 3 sends the control information apparatus 4a to network address configuration server 1.

Specifically, after step S32, user access server 3 further sends the trigger signal to apparatus 4a according to the identification information of apparatus 4a, thereby notifying it with the updated control information.

The identification information of apparatus 4a may be the routing identification information or the hardware identification information thereof, and such information is generally complicated and elusive. Preferably, the control instruction set by user 8 may adopt such easily remembered items as user name plus apparatus name to differentiate the different apparatus. For instance, user name in the control instruction set by user 8 is "1111 ", apparatus name is "refrigerator". Therefore, in user access server 3, prior to in step S31, the correspondence relationship between user name plus apparatus name and apparatus identification information further needs to be established. In step S32, user access server 3 determines the identification information apparatus 4a according to control instruction and the aforementioned correspondence relationship, and transforms the content of control instruction into control information suitable for transmission via network address configuration protocol message.

Those skilled in the art should appreciate, the network address configuration protocol adopted in the present invention is not limited to DHCP protocol. Other protocols with the functionality of network address configuration, for instance PPP protocol, may also be applicable to the present invention.

In one embodiment of the present invention, the network address configuration protocol, adopted into the system, is DHCP protocol, and network address configuration server 1 is a DHCP server. A structure of DHCP option, as shown in Fig.6, may be adopted in such embodiment. The content of DHCP option shown in Fig.6 is respectively: the option code of such option, option length of such option, several sub options. The content of one sub option is respectively: the option code of such sub option, the length of sub option value of such sub option, sub option value of such sub option. The option for bearing the control information of apparatus may be defined as follows: several sub options respectively corresponds to a control parameter. According to the usage of household electric appliance device, a typical control parameter may comprise: starting time of operation, ending time of operation, operating temperature and so on. Specifically, the option for bearing the control information of the apparatus may comprise: sub option 1, the value of which corresponds to the starting time of operation; sub option 2, the value of which corresponds to the ending time of operation; sub option 3, the value of which corresponds to the running temperature. Detailed description will be made for the procedure that user 8 remotely controls apparatus 4a located in his house.

At 15: 00, user 8 sets a control instruction for apparatus 4a. The user access server 3 acquires such control instruction, and determines, according to such instruction, the identification information and control information of apparatus 4a, wherein the identification information is the routing identification information of apparatus 4a, and the content of control information comprises: starting time 16: 00, ending time 20: 00, running temperature 0□. Those skilled in the art should appreciate that, the identification information of apparatus 4a may also be the hardware identification information thereof, for instance its MAC address.

Then, user access server 3 sends a trigger signal according to the routing identification information of apparatus 4a. According to the predetermined status information of the apparatus, the user access server 3 is informed that apparatus 4a has not been initiated, therefore, trigger signal further comprises a initiating control signal.

While apparatus controlling unit 2a receives such trigger signal, it initiates apparatus 4a according to the initiating control signal therein. At the moment, apparatus 4a is not provided with any network address, thus, apparatus controlling unit 2a sends out a DHCP discover message.

DHCP server 1 receives such DHCP discover message, and judges apparatus 4a has no network address, then assigns a network address to it. Additionally, DHCP server 1 further determines, from such message, the routing identification information of apparatus 4a, and sends a querying message to user access server 3 for a query according to the routing identification information of apparatus 4a.

Access user server 3 conducts a search according to the querying message, and transmits to DHCP server 1 with the searched control information of apparatus 4a.

After acquiring the control information of apparatus 4a, DHCP server 1 sends out a DHCP offer message, such message comprises network address to be assigned to apparatus 4a and the control information thereof, wherein the control information is packaged in the extended option field of the DHCP offer message.

After receiving DHCP offer message, apparatus controlling unit 2a acquires therefrom the network address and control information of apparatus 4a, and applies corresponding operation to apparatus 4a according to control information. That is, apparatus controlling unit 2a control apparatus 4a to start at 16: 00, and set the operating temperature to be 0°C.

At 17: 00, user 8 set a new control instruction for apparatus 4a. The user access server 3 acquires this control instruction for updating, and determines the identification information and the updated control information of apparatus 4a according to such instruction, wherein the identification information is the routing identification information apparatus 4a, the content of updated control information comprises: running temperature 4 °C.

Then, user access server 3 sends a trigger signal according to the routing identification information of apparatus 4a.

When apparatus controlling unit 2a receives such trigger signal, send out a DHCP request message according to such trigger signal.

DHCP server 1 receives such DHCP request message, and determines, from such message, the routing identification information of apparatus 4a, and sends querying message to user access server 3 for a query according to the routing identification information of apparatus 4a.

User access server 3 conducts a search according to the querying message, and sends to DHCP server 1 with the searched updated control information of apparatus 4a.

After acquiring the updated control information of apparatus 4a, DHCP server 1 sends a DHCP ACK message, wherein the updated control information is packaged in the extended option field of DHCP ACK message.

After receiving DHCP offer message, apparatus controlling unit 2a acquires therefrom the updated control information of apparatus 4a, and conducts the corresponding operation to apparatus 4a according to the updated control information. That is, apparatus controlling unit 2a controls apparatus 4a to adjust the operating temperature to be 4°C.

If without other control instruction for updating, then at 20: 00, apparatus controlling unit 2a controls apparatus 4a to give an end to the operation.

In the abovementioned embodiment, the user access server 3 and the network address configuration server 1 exist as two independent apparatuses. In some other embodiments of the present invention, the function of these two apparatuses may be carried out by one single apparatus.

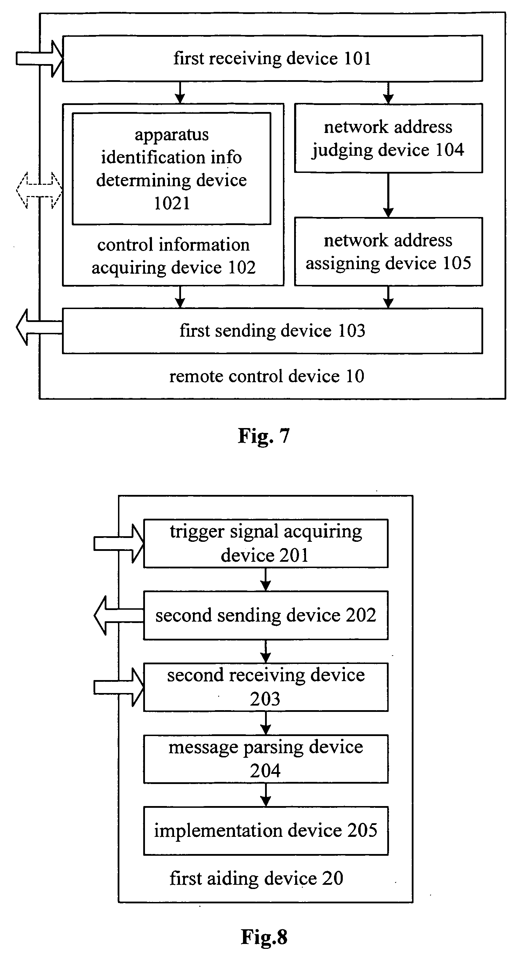

Fig.7 illustrates a block diagram of a remote control device for controlling an apparatus remotely in the network address configuration server of a communication network according to one embodiment of the present invention. As shown in Fig.7, the remote control device 10 of such embodiment comprises: a first receiving device 101, control information acquiring device 102, a first sending device 103, network address judging device 104, network address assigning device 105, wherein control information acquiring device 102 further comprises apparatus identification information determining device 1021. Typically, remote control device 10 is disposed inside network address configuration server 1. In various embodiments of the present invention, remote control device 10 may comprise portions of devices shown in Fig.7, and other device(s) not shown in Fig.7.

Fig.8 illustrates a block diagram of a first aiding device for aiding controlling apparatus remotely in an apparatus controlling unit according to one embodiment of the present invention. As shown in Fig.8, the first aiding device 20 in such embodiment comprises: trigger signal acquiring device 201, a second sending device 202, a second receiving device 203, message parsing device 204, implementation device 205. Typically, a first aiding device 20 is disposed inside apparatus controlling unit 2a, 2b, 2c. In various embodiments of the present invention, the first aiding device 20 may comprise portions of device(s) shown in Fig.8, and other device not shown in Fig.8.

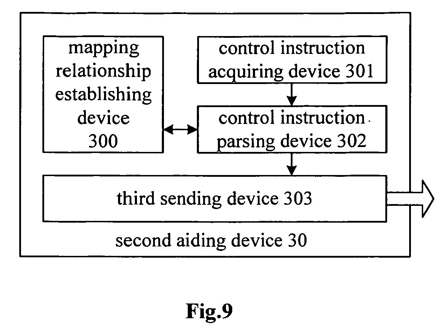

Fig.9 illustrates a block diagram of a second aiding device for aiding controlling apparatus remotely in a user access server according to one embodiment of the present invention. As shown in Fig.9, the second aiding device 30 in such embodiment comprise: mapping relationship establishing device 300, control instruction acquiring device 301, control instruction parsing device 302, a third sending device 303. Typically, the second aiding device 30 is disposed inside user access server 3. In various embodiments of the present invention, the second aiding device 30 may comprise portions of device shown in Fig.9, and other device(s) not shown in Fig.9.

Description of the present invention will be given as below from a device aspect in conjunction with Fig.2, Fig.7, Fig.8 and Fig.9.

According to an embodiment of the present invention, remote control applied by network address configuration server 1 to apparatus 4b is as follows, wherein apparatus 4b is an air-conditioner.

With reference to Fig.7, following operations is to be performed within network address configuration server 1:
First, control information acquiring device 102 acquires control information of apparatus 4b. Apparatus 4b is an air-conditioner, then its control information may comprise setting about running time, for instance starting time 17: 00, ending time 22: 00, and setting about running temperature, for instance 28°C.

Subsequently, the first sending device 103 sends the control information about apparatus 4b to apparatus 4b via network address configuration protocol message. Specifically, the network address configuration protocol message herein may adopt DHCP message, and control information may be loaded in the extended option field of DHCP message. The network address configuration protocol message sent by the first sending device 103 may be DHCP offer message or DHCP ACK message.

Generally, apparatus controlling unit 2b is disposed inside apparatus 4b. Otherwise, apparatus controlling unit 2b may be an independent apparatus in connection with apparatus 4b. Referring to Fig.8, the following operations are to be performed on the side of apparatus controlling unit 2b:
First, second receiving device 203 receives network address configuration protocol message from network address configuration server 1.

Then, message parsing device 204 acquires control information about apparatus 4b from the received protocol message.

Subsequently, implementation device 205 applies corresponding action to apparatus 4b according to the control information. For instance, implementation device 205 controls apparatus 4b to start at 17: 00, and sets the operating temperature to be 28□; at 22: 00, implementation device 205 controls apparatus 4b to halt operation.

Preferably, before receiving the network address configuration protocol message from network address configuration server 1, the second sending device 202, within the first aiding device 20 of apparatus controlling unit 2b, sends a network address configuration protocol message to network address configuration server 1, which is used for querying network address configuration information and/or control information. Specifically, the network address configuration protocol message sent by the second sending device 202 may be DHCP discover message or DHCP request message.

More specifically, before sending out network address configuration protocol message, trigger signal acquiring device 201, within the first aiding device 20 of apparatus controlling unit 2b, acquires trigger signal, such trigger signal is from user access server 3. The second sending device 202 sends the network address configuration protocol message to network address configuration server 1 according to the acquired trigger signal. If trigger signal comprises initiating control signal, then apparatus controlling unit 2b initiates apparatus 4b according to the initiating control signal, then the second sending device 202 sends the network address configuration protocol message to network address configuration server 1.

The first receiving device 101 within network address configuration server 1 receives the network address configuration protocol message from apparatus controlling unit 2b. Then, apparatus identification information determining device 1021 determines the identification information of apparatus 4b according to the address configuration protocol message from apparatus controlling unit 2b, and control information acquiring device 102 determines the control information of apparatus 4b according to such identification information. More specifically, the identification information of apparatus 4b may be the routing identification information thereof, for instance the port number, of access device 7, occupied on occasion of apparatus 4b accessing network, and so on; or, such identification information may also be the hardware identification information of apparatus 4b, for instance the MAC address thereof.

Additionally, according to the network address configuration protocol message from apparatus controlling unit 2b, network address judging device 104 within network address configuration server 1 further judges whether apparatus 4b has a network address. If apparatus 4b has no network address, then a network address assigning device within network address configuration server 1 assigns network address to apparatus 4b, then the first sending device 103, sends control information of both network address and apparatus 4b to apparatus 4b via the network address configuration protocol message.

Referring to Fig.9, following operations will be performed within on the side of user access server 3:
First, control instruction acquiring device 301 acquires the control instruction from client. For instance, apparatus 4b is an electrical apparatus in the house of user 8, user 8 sets control instruction for apparatus 4b. The specific setting mode might be that user 8 remotely log on user access server 3 to set, or control instruction acquiring device 301 receives short message from user 8 to finish the setting, and so on.

Subsequently, control instruction parsing device 302 determines the identification information of apparatus 4b according to the acquired control instruction about apparatus 4b, and transforms content of control instruction to control information suitable for a transmission via the network address configuration protocol message.

Then, the third sending device 303 sends the control information apparatus 4b to network address configuration server 1.

Specifically, the third sending device 303 further sends the trigger signal to apparatus 4b according to the identification information of apparatus 4b, thereby notifying it with the updated control information.

The identification information of apparatus 4b may be the routing identification information or the hardware identification information thereof, and such information is generally complicated and elusive. Preferably, the control instruction set by user 8 may adopt such easily remembered items as user name plus apparatus name to differentiate the different apparatus. For instance, user name in the control instruction set by user 8 is "1111", apparatus name is "air-conditioner". Therefore, in user access server 3, mapping relationship establishing device 300 further needs to establish the correspondence relationship between user name plus apparatus name and apparatus identification information. Control instruction parsing device 302 determines the identification information apparatus 4b according to control instruction and the aforementioned correspondence relationship, and transforms the content of control instruction into control information suitable for transmission via network address configuration protocol message.

Those skilled in the art should appreciate the network address configuration protocol adopted in the present invention is not limited to DHCP protocol. Other protocols with the functionality of network address configuration, for instance PPP protocol, may also be applicable to the present invention.

In one embodiment of the present invention, the network address configuration protocol, adopted into the system, is DHCP protocol, and network address configuration server 1 is a DHCP server. A structure of DHCP option, as shown in Fig.6, may be adopted in such embodiment. The content of DHCP option shown in Fig.6 is respectively: the option code of such option, option length of such option, several sub options. The content of one sub option is respectively: the option code of such sub option, the length of sub option value of such sub option, sub option value of such sub option. The option for bearing the control information of apparatus may be defined as follows: several sub options respectively corresponds to a control parameter. According to the usage of household electric appliance device, a typical control parameter may comprise: starting time of operation, ending time of operation, operating temperature and so on. Specifically, the option for bearing the control information of the apparatus may comprise: sub option 1, the value of which corresponds to the starting time of operation; sub option 2, the value of which corresponds to the ending time of operation; sub option 3, the value of which corresponds to the running temperature. Detailed description will be made for the procedure that user 8 remotely controls apparatus 4b located in his house.

At 15: 30, user 8 sets a control instruction for apparatus 4b. The control instruction acquiring device 301, within user access server 3, acquires such control instruction, and the control instruction parsing device 302 determines, according to such instruction, the identification information and control information of apparatus 4b, wherein the identification information is the hardware identification information, namely the MAC address, of apparatus 4b, and the content of control information comprises: starting time 17:00, ending time 22: 00, running temperature 28 °C. Those skilled in the art should appreciate that, the identification information of apparatus 4b may also be the routing identification information thereof, for instance for instance the port number, of access device 7, occupied by device 4b.

Then, the third sending device 303, within user access server 3, sends a trigger signal according to the hardware identification information of apparatus 4b. According to the predetermined status information of the apparatus, user access server 3 is informed that apparatus 4b has not been initiated, therefore, trigger signal further comprises a initiating control signal.

While within apparatus controlling unit 2b, trigger signal acquiring device 201 receives such trigger signal, then apparatus controlling unit 2b initiates apparatus 4b according to the initiating control signal in such trigger signal. The initiating operation may be performed by implementation device 205. At the moment, apparatus 4b is not provided with any network address, thus, the second sending device 202 within apparatus controlling unit 2b sends out a DHCP discover message.

Within DHCP server 1, the first receiving device 101 receives such DHCP discover message. According to such message, network address judging device 104 judges apparatus 4b has no network address, then network address assigning device 105 assigns a network address to it. Additionally, apparatus identification information determining device 1021 further determines, from such message, the hardware identification information of apparatus 4b, and control information acquiring device 102 sends a querying message to user access server 3 for a query according to the hardware identification information of apparatus 4b, and such querying message may contain hardware identification information of apparatus 4b.

Access user server 3 conducts a search according to hardware identification information of apparatus 4b in the querying message, and transmits to DHCP server 1 with the searched control information of apparatus 4b.

Inside DHCP server 1, after control information acquiring device 102 acquiring the control information of apparatus 4b, the first sending device 103 sends out a DHCP offer message, such message comprises network address to be assigned to apparatus 4b and the control information thereof, wherein the control information is packaged in the extended option field of the DHCP offer message.

Inside apparatus controlling unit 2b, after the second receiving device 203 receiving DHCP offer message, the message parsing device 204 acquires, out of such message, the network address and control information of apparatus 4b, and then the implementation device 205 applies corresponding operation to apparatus 4b according to control information. Specifically, implementation device 205 controls apparatus 4b to start at 17: 00, and set the operating temperature to be 28 °C.

At 18: 00, user 8 set a new control instruction for apparatus 4b. Within user access server 3, control instruction acquiring device 301 acquires this control instruction for updating, and the control instruction parsing device 302 determines the identification information and the updated control information of apparatus 4b according to such instruction, wherein the identification information is the hardware identification information apparatus 4b, the content of updated control information comprises: running temperature 25 °C. Then the third sending device 303 sends a trigger signal according to the hardware identification information apparatus 4b.

Inside apparatus controlling unit 2b, after trigger signal acquiring device 201 receiving such trigger signal, the second sending device 202 sends out a DHCP request message according to such trigger signal.

Inside DHCP server 1, the first receiving device 101 receives such DHCP request message, and the apparatus identification information determining device 1021 determines, out of such message, the hardware identification information of apparatus 4b, and control information acquiring device 102 sends querying message to user access server 3 for a query according to the hardware identification information of apparatus 4b. The querying message may contain the hardware identification information of apparatus 4b.

User access server 3 conducts a search according to the hardware identification information of apparatus 4b in the querying message, and sends to DHCP server 1 with the searched updated control information of apparatus 4b.

Inside DHCP server 1, after control information acquiring device 102 acquires the updated control information of apparatus 4b, the first sending device 103 sends a DHCP ACK message, wherein the updated control information is packaged in the extended option field of DHCP ACK message.

Inside apparatus controlling unit 2b, after the second receiving device 203 receives DHCP offer message, the message parsing device 204 acquires, out of such message, the updated control information of apparatus 4b, and then the implementation device 205 conducts the corresponding operation to apparatus 4b according to the updated control information. Specifically, implementation device 205 controls apparatus 4b to adjust the operating temperature to be 25 °C.

If there is no other control instruction for updating, then at 22: 00, the implementation device 205 within apparatus controlling unit 2b controls apparatus 4b to give an end to the operation.

In the abovementioned embodiment, the user access server 3 and the network address configuration server 1 exist as two independent apparatuses. In some other embodiments of the present invention, the remote control device 10 and the second aiding device 30 are disposed within one single apparatus, which is equipped with the functionality of both the user access server 3 and the network address configuration server 1.

Those skilled in the art should appreciate that, various device in the present invention may be implemented by either hardware device or function module of software.

Some description has been made to some non-limiting embodiments of the present invention, however, the present invention is not limited to particular system, device or specific protocol, and those skilled in the art may make some variation or modification within the scope of the appended claims.

## Claims

1. A remote control device (10) for controlling an apparatus (4a, 4b, 4c) remotely in the network address configuration server (1) of a communication network, comprising:
a first receiving device (101) for receiving a first network address configuration protocol message sent from an apparatus (4a, 4b, 4c) to be controlled in response to the apparatus (4a, 4b, 4c) to be controlled receiving a trigger signal from a user access server (3);
a apparatus identification information determining device (1021) for determining an identification information of said apparatus (4a, 4b, 4c) to be controlled according to said first network address configuration protocol message;
**characterized in that** the remote control device (10) further comprising:
a control information acquiring device (102) for acquiring control information of said apparatus (4a, 4b, 4c) to be controlled from said user access server (3) according to the identification information of said apparatus (4a, 4b, 4c) to be controlled (S12);
a first sending device (103) for sending said control information to said apparatus (4a, 4b, 4c) to be controlled via a second network address configuration protocol message (S 13).

2. The remote control device (10) according to claim 1, wherein said trigger signal is sent from the user access server (3) according to a control instruction from a user (8) and includes user name plus apparatus name to determine the apparatus identification information of said apparatus (4a, 4b, 4c) to be controlled.

3. The remote control device (10) according to claim 2, wherein said identification information comprises the routing identification information of said apparatus (4a, 4b, 4c) to be controlled;
said control information acquiring device (102) is further configured to determine said control information according to the routing identification information of said apparatus (4a, 4b, 4c) to be controlled.

4. The remote control device (10) according to claim 2, wherein said identification information comprises the hardware identification information of said apparatus (4a, 4b, 4c) to be controlled;
said control information acquiring device (102) is further configured to determine said control information according to the hardware identification information of said apparatus (4a, 4b, 4c) to be controlled.

5. The remote control device (10) according to claim 2, wherein said remote control device (10) further comprises:
a network address judging device (104), for judging whether said apparatus (4a, 4b, 4c) to be controlled has a network address according to said network address configuration protocol message from said apparatus (4a, 4b, 4c) to be controlled;
a network address assigning device (105), for assigning a network address for said apparatus (4a, 4b, 4c) if said apparatus (4a, 4b, 4c) to be controlled had no network address;
said first sending device (103) is further configured to send both said network address and said control information to said apparatus (4a, 4b, 4c) to be controlled, via network address configuration protocol message.

6. The remote control device (10) according to any of claims 1 to 5, wherein said network address configuration server (1) is a DHCP server, said network address configuration protocol message is a DHCP message, said control information is carried within option field of DHCP message.

7. A second aiding device (30) for aiding controlling apparatus (4a, 4b, 4c) remotely in a user access server (3), comprising:
a control instruction acquiring device (301) for acquiring a control instruction (S31);
a control instruction parsing device (302) for determining the apparatus identification information and control information of a apparatus (4a, 4b, 4c) to be controlled according to said control instruction (S32);
**characterized in that** the second aiding device (30) further comprising:
a third sending device (303) for sending a trigger signal to said apparatus (4a, 4b, 4c) according to said identification information so that said control information can be notified from a network address configuration server (1) and sending the control information of said apparatus (4a, 4b, 4c) to the network address configuration server (1) (S33).

8. The second aiding device (30) according to claim 7, wherein said control instruction parsing device (302) determines the apparatus identification information including the routing identification information or the hardware identification information of said apparatus (4a, 4b, 4c) to be controlled, according to user name plus apparatus name included in the control instruction.

9. The second aiding device (30) according to claim 7 or 8, wherein said second aiding device (30) further comprises:
a mapping relationship establishing device (300) for establishing the correspondence between said apparatus (4a, 4b, 4c) to be controlled and the apparatus identification information;
said control instruction parsing device (302) is further configured to determine the apparatus identification information and control information of said apparatus (4a, 4b, 4c) to be controlled according to said control instruction and the correspondence between said apparatus (4a, 4b, 4c) to be controlled and apparatus identification information.

10. The second aiding device (30) according to any of claims 7 to 9, wherein said network address configuration server (1) is a DHCP server.

## Patentansprüche

1. Ein Fernsteuergerät (10) zur Fernsteuerung einer Einrichtung (4a, 4b, 4c) im Netzwerkadressen-Konfigurationsserver (1) eines Kommunikationsnetzwerks, umfassend:
eine erste Empfangsvorrichtung (101) für das Empfangen einer ersten Netzwerkadressenkonfigurationsprotokoll-Nachricht, die von einer zu kontrollierenden Einrichtung (4a, 4b, 4c) als Antwort an die zu kontrollierende Einrichtung (4a, 4b, 4c) gesendet wird und Empfangen eines Trigger-Signals von einem Benutzerzugangsserver (3);
eine Bestimmungsvorrichtung für die Einrichtungsidentifizierungsinformation (1021) zum Bestimmen der Identifizierungsinformation von besagter zu kontrollierender Einrichtung (4a, 4b, 4c) gemäß der ersten besagten Netzwerkadressenkonfigurationsprotokoll-Nachricht;
**dadurch gekennzeichnet, dass** das Fernsteuergerät (10) weiterhin umfasst:
eine Kontrollinformations-Beschaffungsvorrichtung (102) für die Beschaffung von Kontrollinformation besagter zu kontrollierender Einrichtung (4a, 4b, 4c) von dem besagten Benutzerzugangsserver (3) gemäß der Identifizierungsinformationen von besagter zu kontrollierender (S12) Einrichtung (4a, 4b, 4c);
eine erste Sendevorrichtung (103) zum Senden besagter Kontrollinformation an die besagte zu kontrollierende Einrichtung (4a, 4b, 4c) mittels einer zweiten Netzwerkadressenkonfigurationsprotokoll-Nachricht (S13).

2. Fernsteuergerät (10) nach Anspruch 1, wobei besagtes Trigger-Signal vom Benutzerzugangsserver (3) gemäß einer Kontrollanweisung von einem Benutzer (8) gesendet wird und den Benutzernamen und den Einrichtungsnamen beinhaltet, um die Identifizierungsinformation von besagter zu kontrollierender Einrichtung (4a, 4b, 4c) zu bestimmen.

3. Fernsteuergerät (10) nach Anspruch 2, wobei besagte Identifizierungsinformation die Routingidentifizierungsinformation besagter zu kontrollierender Einrichtung (4a, 4b, 4c) umfasst;
besagte Kontrollinformations-Beschaffungsvorrichtung (102) ist weiterhin so konfiguriert, um besagte Kontrollinformation gemäß der Routingidentifizierungsinformation von besagter zu kontrollierender Einrichtung (4a, 4b, 4c) zu bestimmen.

4. Fernsteuergerät (10) nach Anspruch 2, wobei besagte Identifizierungsinformation die Hardwareidentifizierungsinformation von besagter zu kontrollierender Einrichtung (4a, 4b, 4c) umfasst;
besagte Kontrollinformations-Beschaffungsvorrichtung (102) ist weiterhin so konfiguriert, um besagte Kontrollinformation gemäß der Hardwareidentifizierungsinformation von besagter zu kontrollierender Einrichtung (4a, 4b, 4c) zu bestimmen.

5. Fernsteuergerät (10) nach Anspruch 2, wobei besagtes Fernsteuergerät (10) weiterhin umfasst:
eine Netzwerkadressen-Beurteilungsvorrichtung (104), um zu beurteilen, ob besagte zu kontrollierende Einrichtung (4a, 4b, 4c) eine Netzwerkadresse gemäß besagter Netzwerkadressenkonfigurationsprotokoll-Nachricht von besagter zu kontrollierender Einrichtung (4a, 4b, 4c) aufweist;
eine Netzwerkadressen-Zuweisungseinrichtung (105) für die Zuweisung einer Netzwerkadresse für besagte Einrichtung (4a, 4b, 4c), wenn besagte zu kontrollierende Einrichtung (4a, 4b, 4c) keine Netzwerkadresse besaß;
besagte erste Sendevorrichtung (103) ist weiterhin so konfiguriert, sowohl besagte Netzwerkadresse als auch besagte Kontrollinformation an besagte zu kontrollierende Einrichtung (4a, 4b, 4c) mittels einer Netzwerkadressenkonfigurationsprotokoll-Nachricht zu senden.

6. Fernsteuergerät (10) nach einem beliebigen der Ansprüche 1 bis 5, wobei besagter Netzwerkadressen-Konfigurationsserver (1) ein DHCP-Server ist, besagte Netzwerkadressenkonfigurationsprotokoll-Nachricht eine DHCP-Nachricht ist und besagte Kontrollinformation innerhalb des Optionsfeldes der DHCP-Nachricht übermittelt wird.

7. Eine zweite Hilfsvorrichtung (30) zur Fernunterstützung der Kontrolleinrichtung (4a, 4b, 4c) in einem Benutzerzugangsserver (3), umfassend:
eine Kontrollanweisungs-Beschaffungsvorrichtung (301) zum Beschaffen einer Kontrollanweisung (S31);
eine Kontrollanweisungs-Syntaxkontrollvorrichtung (302) zum Bestimmen der Einrichtungsidenfizierungsinformation und der Kontrollinformation der zu kontrollierenden Einrichtung (4a, 4b, 4c) gemäß besagter Kontrollanweisung (S32);
**dadurch gekennzeichnet, dass** die zweite Hilfsvorrichtung (30) weiterhin umfasst:
eine dritte Sendevorrichtung (303) zum Senden eines Trigger-Signals an besagte Einrichtung (4a, 4b, 4c) gemäß besagter Identifizierungsinformation, sodass besagte Kontrollinformation von einem Netzwerkadressen-Konfigurationsserver (1) übermittelt werden kann und die Kontrollinformation von besagter Einrichtung (4a, 4b, 4c) zum Netzwerkadressen-Konfigurationsserver (1) (S33) gesendet wird.

8. Zweite Hilfseinrichtung (30) nach Anspruch 7, wobei besagte Kontrollanweisungs-Syntaxkontrollvorrichtung (302) die Einrichtungsidentifizierungsinformation einschließlich der Routingidentifizierungsinformation oder der Hardwareidentifizierungsinformation von besagter zu kontrollierender Einrichtung (4a, 4b, 4c) gemäß Benutzernamen und Einrichtungsnamen, die in der Kontrollanweisung enthalten sind, bestimmt.

9. Zweite Hilfsvorrichtung (30) nach Anspruch 7 oder 8, wobei besagte zweite Hilfsvorrichtung (30) weiterhin umfasst:
eine eine Mapping-Beziehung erstellende Vorrichtung (300) zum Erstellen der Korrespondenz von besagter zu kontrollierender Einrichtung (4a, 4b, 4c) und der Einrichtungsidentifizierungsinformation;
besagte Kontrollanweisungs-Syntaxkontrollvorrichtung (302) ist weiterhin konfiguriert, um die Einrichtungsidentifizierungsinformation und die Kontrollinformation von besagter zu kontrollierender Einrichtung (4a, 4b, 4c) gemäß der besagten Kontrollanweisung und der Korrespondenz zwischen besagter zu kontrollierender Einrichtung (4a, 4b, 4c) und der Einrichtungsidentifizierungsinformation zu bestimmen.

10. Zweite Hilfsvorrichtung (30) nach einem beliebigen der Ansprüche 7 bis 9, wobei besagter Netzwerkadressen-Konfigurationsserver (1) ein DHCP-Server ist.

## Revendications

1. Dispositif de commande à distance (10) pour commander un appareil (4a, 4b, 4c) à distance dans le serveur de configuration d'adresse réseau (1) d'un réseau de communication, comprenant :
un premier dispositif de réception (101) pour recevoir un premier message de protocole de configuration d'adresse réseau envoyé depuis un appareil (4a, 4b, 4c) à commander en réponse à la réception par l'appareil (4a, 4b, 4c) à commander d'un signal de déclenchement provenant d'un serveur d'accès utilisateur (3) ;
un dispositif de détermination d'informations d'identification d'appareil (1021) pour déterminer des informations d'identification dudit appareil (4a, 4b, 4c) à commander selon ledit premier message de protocole de configuration d'adresse réseau ;
**caractérisé en ce que** le dispositif de commande à distance (10) comprend en outre :
un dispositif d'acquisition d'informations de commande (102) pour acquérir des informations de commande dudit appareil (4a, 4b, 4c) à commander à partir dudit serveur d'accès utilisateur (3) selon les informations d'identification dudit appareil (4a, 4b, 4c) à commander (S12) ;
un premier dispositif d'envoi (103) pour envoyer lesdites informations de commande audit appareil (4a, 4b, 4c) à commander via un deuxième message de protocole de configuration d'adresse réseau (S13).

2. Dispositif de commande à distance (10) selon la revendication 1, dans lequel ledit signal de déclenchement est envoyé depuis le serveur d'accès utilisateur (3) selon une instruction de commande d'un utilisateur (8) et inclut un nom d'utilisateur plus un nom d'appareil pour déterminer les informations d'identification d'appareil dudit appareil (4a, 4b, 4c) à commander.

3. Dispositif de commande à distance (10) selon la revendication 2, dans lequel lesdites informations d'identification comprennent les informations d'identification de routage dudit appareil (4a, 4b, 4c) à commander ;
ledit dispositif d'acquisition d'informations de commande (102) est en outre configuré pour déterminer lesdites informations de commande selon les informations d'identification de routage dudit appareil (4a, 4b, 4c) à commander.

4. Dispositif de commande à distance (10) selon la revendication 2, dans lequel lesdites informations d'identification comprennent les informations d'identification matérielle dudit appareil (4a, 4b, 4c) à commander ;
ledit dispositif d'acquisition d'informations de commande (102) est en outre configuré pour déterminer lesdites informations de commande selon les informations d'identification matérielle dudit appareil (4a, 4b, 4c) à commander.

5. Dispositif de commande à distance (10) selon la revendication 2, dans lequel ledit dispositif de commande à distance (10) comprend en outre :
un dispositif d'évaluation d'adresse réseau (104), pour évaluer si ledit appareil (4a, 4b, 4c) à commander a une adresse réseau selon ledit message de protocole de configuration d'adresse réseau provenant dudit appareil (4a, 4b, 4c) à commander ;
un dispositif d'allocation d'adresse réseau (105), pour allouer une adresse réseau audit appareil (4a, 4b, 4c) si ledit appareil (4a, 4b, 4c) à commander n'a pas d'adresse réseau ;
ledit premier dispositif d'envoi (103) est en outre configuré pour envoyer à la fois ladite adresse réseau et lesdites informations de commande audit appareil (4a, 4b, 4c) à commander, via un message de protocole de configuration d'adresse réseau.

6. Dispositif de commande à distance (10) selon l'une quelconque des revendications 1 à 5, dans lequel ledit serveur de configuration d'adresse réseau (1) est un serveur DHCP, ledit message de protocole de configuration d'adresse réseau est un message DHCP, lesdites informations de commande sont transportées dans le champ d'option du message DHCP.

7. Un deuxième dispositif d'aide (30) pour aider à commander un appareil (4a, 4b, 4c) à distance dans un serveur d'accès utilisateur (3), comprenant :
un dispositif d'acquisition d'instruction de commande (301) pour acquérir une instruction de commande (S31);
un dispositif d'analyse d'instruction de commande (302) pour déterminer les informations d'identification d'appareil et les informations de commande d'un appareil (4a, 4b, 4c) à commander selon ladite instruction de commande (S32) ;
**caractérisé en ce que** le deuxième dispositif d'aide (30) comprend en outre :
un troisième dispositif d'envoi (303) pour envoyer un signal de déclenchement audit appareil (4a, 4b, 4c) selon lesdites informations d'identification de sorte que lesdites informations de commande puissent être notifiées depuis un serveur de configuration d'adresse réseau (1) et envoyer les informations de commande dudit appareil (4a, 4b, 4c) au serveur de configuration d'adresse réseau (1) (S33).

8. Deuxième dispositif d'aide (30) selon la revendication 7, dans lequel ledit dispositif d'analyse d'instruction de commande (302) détermine les informations d'identification d'appareil incluant les informations d'identification de routage ou les informations d'identification matérielle dudit appareil (4a, 4b, 4c) à commander, selon le nom d'utilisateur plus le nom d'appareil inclus dans l'instruction de commande.

9. Deuxième dispositif d'aide (30) selon les revendications 7 ou 8, dans lequel ledit deuxième dispositif d'aide (30) comprend en outre :
un dispositif d'établissement de relation de correspondance (300) pour établir la correspondance entre ledit appareil (4a, 4b, 4c) à commander et les informations d'identification d'appareil ;
ledit dispositif d'analyse d'instruction de commande (302) est en outre configuré pour déterminer les informations d'identification d'appareil et les informations de commande dudit appareil (4a, 4b, 4c) à commander selon ladite instruction de commande et la correspondance entre ledit appareil (4a, 4b, 4c) à commander et les informations d'identification d'appareil.

10. Deuxième dispositif d'aide (30) selon l'une quelconque des revendications 7 à 9, dans lequel ledit serveur de configuration d'adresse réseau (1) est un serveur DHCP.
